Europäisches Patentamt

European Patent Office

Office européen des brevets

(11) Numéro de publication : **0 479 645 B1**

# (12) FASCICULE DE BREVET EUROPEEN

(45) Date de publication du fascicule du brevet :
**12.01.94 Bulletin 94/02**

(51) Int. CI.⁵ : **C10G 11/18, B01J 8/18**

(21) Numéro de dépôt : **91402553.1**

(22) Date de dépôt : **25.09.91**

(54) **Procédé et dispositif de craquage catalytique en lit fluide à courant descendant.**

(30) Priorité : **03.10.90 FR 9012275**

(43) Date de publication de la demande :
**08.04.92 Bulletin 92/15**

(45) Mention de la délivrance du brevet :
**12.01.94 Bulletin 94/02**

(84) Etats contractants désignés :
**BE DE ES GB IT NL**

(56) Documents cités :
**FR-A- 2 655 053**
**US-A- 4 385 985**
**US-A- 4 532 026**

(73) Titulaire : **INSTITUT FRANCAIS DU PETROLE**
**4, Avenue de Bois Préau**
**F-92502 Rueil-Malmaison (FR)**

(72) Inventeur : **Pontier, Renaud**
**Le Village, Luzinay**
**F-38200 Vienne (FR)**
Inventeur : **Hoffmann, Frédéric**
**68 Quai de Jemmapes**
**F-75010 Paris (FR)**
Inventeur : **Galtier, Pierre**
**Centre Hospitalier Mont SALAMON BP 12**
**F-38209 Vienne Cedex (FR)**

## Description

L'invention se rapporte à un procédé de craquage catalytique permettant plus spécialement le traitement d'huiles hydrocarbonées lourdes ainsi qu'à l'appareillage permettant la mise en oeuvre de ce procédé.

L'évolution de la nature des approvisionnements en pétrole bruts, ainsi que la diminution de la demande en produits raffinés en fuel-oils en faveur de produits plus légers du type essence, ont conduit l'industrie pétrolière du raffinage à développer divers procédés permettant de valoriser des huiles lourdes naturelles ainsi que des huiles résiduelles telles que des résidus de distillation atmosphérique ou des résidus de distillation sous vide.

En ce qui concerne les procédés de craquage catalytique mettant en oeuvre de telles charges, il est apparu que les principales difficultés proviennent du fait que ces charges contiennent des entités organiques telles que des asphaltènes ainsi que des hydrocarbures aromatiques polycycliques condensés, qui sont difficiles à craquer en molécules plus légères susceptibles de fournir des rendements importants en fractions bouillant à des points d'ébullition moins élevés, mais qui ont tendance à s'associer pour donner lieu à des formations de coke importantes qui se déposent sur les catalyseurs utilisés, diminuant ainsi leur activité. De surcroît, la présence dans ces huiles lourdes de quantités importantes de métaux lourds, tels que par exemple le nickel, le vanadium, le fer, etc. est considérée comme préjudiciable, car ces métaux ont tendance à empoisonner, ou tout au moins à désactiver, les catalyseurs de type zéolite généralement utilisés dans les procédés actuels de craquage catalytique en lit fluidisé, nommés plus loin F.C.C..

Un certain nombre de facteurs essentiels peuvent cependant permettre la conversion de produits lourds en fractions plus légères avec une bonne sélectivité, tout en maintenant une formation de coke la plus réduite possible.

Parmi ces facteurs, l'un des plus importants consiste à assurer, au niveau du contact de la charge hydrocarbonée (qui est généralement préchauffée et additionnée éventuellement de vapeur d'eau) et du catalyseur chaud régénéré utilisé dans l'unité de craquage catalytique, un mélange tel que le transfert de chaleur entre la charge et le catalyseur soit effectué le plus rapidement possible et de façon la plus régulière possible ; il est également primordial que le renouvellement du catalyseur régénéré au niveau de l'introduction de la charge dans la zone réactionnelle soit réalisé de façon permanente et efficace, en évitant en particulier les phénomènes de rétro-mélange qui accroissent les temps de contact et provoquent une diminution importante de la formation de coupes légères par augmentation du pourcentage pondéral du coke formé sur les grains de catalyseur.

Un autre phénomène important, également préjudiciable à la bonne marche d'une unité de F.C.C. plus spécialement destinée à traiter des charges lourdes, consiste en la difficulté d'obtenir une bonne homogénéité radiale du catalyseur, tant au début de la zone réactionnelle que tout au long de cette zone.

Quant à la sélectivité des réactions de craquage d'une façon générale, il est connu qu'elle est d'autant meilleure que l'écoulement des fluides se rapproche d'un écoulement de type piston, qu'il est particulièrement difficile d'obtenir dans des unités de F.C.C. conventionnelles.

La présente invention vise à obtenir simultanément les meilleures conditions pour accéder aux trois facteurs précédemment cités : absence de rétro-mélange, homogénéité radiale et écoulement de type piston. Cet objectif a pu être atteint dans une zone réactionnelle parcourue par un co-courant de charge et de catalyseur dans le sens descendant, ce catalyseur étant porté à un niveau de fluidisation bien défini avant son contact avec la charge.

Parmi les procédés F.C.C. décrits dans l'art antérieur et utilisant un réacteur à co-courant descendant dans la zone réactionnelle, certains sont destinés à traiter des charges conventionnelles telles que des gazoles sous vide ; le brevet US-A-2420558 qui décrit une telle méthode, ne met en jeu qu'une seule zone de régénération du catalyseur ; le brevet US-A-2965454 décrit un appareillage dont la zone réactionnelle est constituée par une pluralité de tubes verticaux parcourus par les co-courants descendants de charge et de catalyseur. Le brevet US-A-3835029 se rapporte également à un procédé de F.C.C. à co-courant descendant, qui ne s'applique qu'à des charges légères (vaporisables entièrement entre 510 et 550 °C) dont l'introduction est faite en phase vapeur en dessous de l'introduction du catalyseur dans la zone réactionnelle, lorsque la vitesse du catalyseur est comprise entre 9 et 30 m/s.

Ces méthodes ne conviennent pas à des charges hydrocarbonées plus lourdes, car le choix d'une vitesse aussi élevée du catalyseur impose que la charge soit vaporisée complètement avant le contact avec celui-ci. Or l'introduction d'une charge lourde à l'état vaporisé s'accompagnerait nécessairement d'un craquage thermique non souhaité (formation de coke).

Le brevet US-A-4385985 décrit un procédé de craquage catalytique à flux descendant amélioré permettant de traiter des charges lourds, de point final d'ébullition supérieur à 560 °C et ayant une teneur en carbone Conradson égale ou supérieure à 3 % ; cependant, le système consistant à introduire le catalyseur à partir d'une phase dense, sous forme d'un flux de particules dont la masse volumique apparente n'est pas contrôlée, ne permet pas une répartition homogène du catalyseur au niveau de l'injection et par conséquent une vaporisation complète et rapide de la charge sur toute la section du réacteur.

L'art antérieur peut aussi être illustré par le brevet US-A-4532 026.

Mais aucun des dispositifs mentionnés ne permet de réaliser une injection convenable de charge hydrocarbonée lourde dans une zone réactionnelle de craquage catalytique en assurant à la fois un mélange rapide (inférieur de préférence à 500 millisecondes) du catalyseur et de la charge vaporisée à son contact, une augmentation du coefficient d'échange thermique et une bonne homogénéité radiale de mélange sur toute la surface du réacteur.

L'invention se rapporte donc à un nouveau procédé de F.C.C. (Fluid Catalytic Cracking ou craquage catalytique en lit fluidisé) remédiant aux inconvénients mentionnés ci-avant, plus spécialement utilisable pour la transformation de charges hydrocarbonées lourdes ; en effet ces charges peuvent être soit des charges classiques, c'est-à-dire présentant par exemple des points d'ébullition finaux de l'ordre de 400 °C, tels que des gazoles sous vide, mais aussi des huiles hydrocarbonées plus lourdes, telles que des pétroles bruts et/ou désessenciés, et des résidus de distillation atmosphérique ou de distillation sous vide ; ces charges peuvent le cas échéant avoir reçu un traitement préalable tel que, par exemple, un hydrotraitement en présence de catalyseurs de type cobalt-molybdène. Les charges préférées de l'invention seront celles, contenant des fractions bouillant normalement jusqu'à 700 °C et plus, pouvant contenir des pourcentages élevés de produits asphalténiques, et présenter une teneur en carbone Conradson allant jusqu'à 4 % et au delà. Ces charges peuvent être diluées ou non par des coupes plus légères conventionnelles, pouvant inclure des coupes d'hydrocarbures ayant déjà subi l'opération de craquage, qui sont recyclées, comme par exemple des huiles de recyclages légères ("light cycle oils", L.C.O.) ou des huiles lourdes de recyclage ("heavy cycle oils" H.C.O.).

Suivant le mode préféré de l'invention, ces charges sont préchauffées dans un domaine de température compris entre 100 et 250 °C avant leur traitement.

De manière générale, l'invention concerne un procédé de craquage catalytique en lit fluidisé d'une charge hydrocarbonée dans une zone de réaction, de préférence sensiblement verticale, dans laquelle la charge et le catalyseur circulent à co-courant globalement de haut en bas, le procédé comportant une étape d'alimentation en catalyseur, au moins en partie régénéré, à l'extrémité supérieure de la zone de réaction, une étape d'introduction et de pulvérisation de la charge dans une zone d'introduction située en dessous de la zone d'alimentation en catalyseur dans la partie supérieure de ladite zone de réaction, une étape de mise en contact dudit catalyseur et de ladite charge dans la partie supérieure de ladite zone de réaction, une étape de circulation du catalyseur et de la charge dans la zone de réaction au cours de laquelle on effectue le craquage de ladite charge dans des conditions de craquage appropriées et on désactive au moins en partie le catalyseur par dépôt de coke sur celui-ci, une étape de séparation et de strippage du catalyseur désactivé de la charge hydrocarbonée craquée dans une zone de séparation à l'extrémité inférieure de la zone de réaction, une étape de régénération d'au moins une partie du catalyseur désactivé dans au moins une zone de régénération et une étape de recyclage du catalyseur au moins en partie régénéré dans une zone de recyclage en amont de l'extrémité supérieure de la zone de réaction, caractérisé en ce que :

a) on prélève, lors de l'étape de recyclage, le catalyseur au moins en partie régénéré à partir d'une phase dense,

b) on effectue l'étape d'alimentation en catalyseur à l'extrémité supérieure de la zone de réaction en présence d'au moins un gaz de fluidisation et l'on obtient une suspension de catalyseur et de gaz,

c) on mesure la masse volumique de ladite suspension, par des moyens de mesure appropriés, en amont de la zone d'introduction de la charge,

d) on ajuste et régule par des moyens adéquats le débit du gaz de fluidisation en amont de la zone d'introduction de la charge dans des conditions telles que la masse volumique de la suspension gaz-solide ainsi créée soit compris entre 80 et 500 kg/m³ avant sa mise en contact avec ladite charge.

Les conditions opératoires précitées sont donc très proches de celles préconisées dans les configurations avec élévateur (riser). On augmente de ce fait le coefficient d'échange thermique entre le catalyseur et la charge lourde et la répartition du catalyseur selon un plan radial est plus homogène. Il s'ensuit une vaporisation plus rapide de la charge qui contribue à une meilleure sélectivité en fraction essence d'autant plus que les phénomènes de rétro-mélange sont minimisés. Malgré le type de charges lourdes traitées, on a observé parallèlement un moindre dépôt de coke sur le catalyseur.

Les conditions de fluidisation peuvent être telles que la vitesse du catalyseur avant son contact avec la charge est d'environ 2 m/s à environ 8 m/s.

Selon une caractéristique particulièrement avantageuse, le catalyseur avant son contact avec la charge peut avoir une masse volumique apparente dans la suspension solide-gaz de 200 à 300 kg/m³ et une vitesse de 3 à 5 m/s.

C'est dans ces conditions que l'on a observé les meilleurs résultats, notamment en terme de coefficient d'échange thermique entre le catalyseur et la charge lourde qui est ainsi plus rapidement vaporisée.

Il est préférable par ailleurs, de régénérer le catalyseur, désactivé par le coke déposé lors de la réaction de craquage, dans deux zones de régénération. Ce catalyseur est tout d'abord envoyé dans une première zone de régénération où il est régénéré en partie, puis dans une deuxième zone de régénération à une température plus élevée comprise en général entre 650 et 900 °C, de préférence entre 750 et 800 °C et le catalyseur ainsi régénéré est recyclé, à une température de 800 °C par exemple, vers la zone réactionnelle de craquage.

Selon un premier mode de mise en oeuvre du procédé, la zone de recyclage est globalement ascendante et la vitesse d'ascension du catalyseur grâce à des moyens de fluidisation appropriés est en général de 5 à 20 m/s.

Selon une autre caractéristique avantageuse de l'invention, la zone de recyclage du catalyseur peut comprendre, en aval de la zone ascendante, une zone de stockage en lit fluidisé dense où l'on fait s'écouler le catalyseur régénéré. On le prélève dans le lit dense et on le fait circuler ensuite de la zone de stockage jusqu'à la partie supérieure de la zone réactionnelle dans des conditions telles que sa masse volumique apparente dans la suspension est de 80 à 500 kg/m³ avant sa mise en contact avec la charge pulvérisée, la fluidisation du catalyseur étant assurée par au moins un moyen de fluidisation disposé sur un tube de sortie de la zone de stockage en amont de la zone réactionnelle de craquage. Dans ces conditions de fluidisation, la vitesse du catalyseur peut atteindre une valeur de 2 à 8 m/s.

Selon un deuxième mode de mise en oeuvre du procédé, la zone de recyclage peut être descendante et le catalyseur est prélevé avantageusement du lit fluidisé dense du second régénérateur et s'écoule vers la zone réactionnelle selon les conditions de vitesse et de masse volumique apparente ci-dessus grâce à un moyen de fluidisation disposé préférentiellement sur le tube de sortie conduisant à la zone réactionnelle de craquage.

La séparation du catalyseur et de l'effluent de craquage peut être réalisé, par exemple, de deux façons :
- selon une première variante, on peut séparer le catalyseur désactivé de la charge craquée par gravité dans la zone de séparation puis on effectue une étape de cyclonage d'une partie au moins du catalyseur entraîné par l'effluent et on récupère un effluent de craquage ;
- selon une deuxième variante, on peut séparer dans la zone de séparation le catalyseur désactivé de la charge craquée en procédant, en sortie de la zone de réaction, à une étape de cyclonage de tout le catalyseur et de l'effluent, et on récupère un effluent de craquage.

L'invention concerne également le dispositif notamment pour la mise en oeuvre du procédé.

Plus spécifiquement, il comporte un réacteur tubulaire allongé et de préférence sensiblement vertical (ou dropper) adapté à craquer ladite charge catalytiquement à co-courant et de haut en bas ayant une extrêmité supérieure et une extrêmité inférieure, ladite extrêmité supérieure comprenant des moyens d'introduction et de pulvérisation de la charge, des moyens d'introduction du catalyseur disposés en amont des moyens d'introduction et de pulvérisation de la charge, au moins une enceinte de séparation reliée à l'extrêmité inférieure du réacteur contenant des moyens de séparation primaire des particules catalytiques désactivées de la charge craquée, des moyens de séparation secondaire par strippage à la vapeur de la majeure partie du catalyseur entraîné par la charge craquée disposés dans la partie inférieure de l'enceinte de séparation, et au moins un moyen de récupération de la charge craquée ou effluent réactionnel, ledit dispositif comportant en outre au moins un régénérateur de catalyseur désactivé ayant une entrée reliée à la partie inférieure de l'enceinte de séparation et des moyens de recyclage du catalyseur au moins en partie régénéré situés entre une sortie inférieure du régénérateur et l'extrêmité supérieure du réacteur, caractérisé en ce que les moyens de recyclage (26b, 21) comportent en combinaison au moins un moyen (30) de fluidisation du catalyseur par un gaz adapté à amener le catalyseur à une masse volumique apparente appropriée en amont des moyens d'introduction (5) et de pulvérisation de la charge et des moyens (28) de contrôle et de régulation adaptés à coopérer avec ledit moyen de fluidisation.

La longueur du réacteur peut être de 6 à 20 fois son diamètre à compter du point d'introduction de la charge et de préférence 10 à 15 fois. Elle peut être définie de manière à déterminer le temps de séjour nécessité par le degré de conversion recherché, sans modifier l'élévation de l'unité.

Selon une autre caractéristique, les moyens d'introduction de la charge sont disposés à une distance du moyen de fluidisation correspondant à 1 à 5 fois le diamètre du réacteur et avantageusement 2 à 3 fois.

Selon une variante du dispositif, les moyens de recyclage peuvent comprendre une colonne allongée sensiblement verticale dont l'extrêmité inférieure est reliée à la partie inférieure du second régénérateur par un tube de liaison et dont l'extrêmité supérieure est reliée à l'extrêmité supérieure du réacteur, l'extrêmité inférieure de ladite colonne comportant au moins un organe de fluidisation par un gaz coopérant avec les moyens de régulation et de contrôle.

Selon une variante plus avantageuse, les moyens de recyclage comprennent une colonne allongée sensiblement verticale dont l'extrêmité inférieure est reliée à la partie inférieure du second générateur par un tube de liaison dont l'extrêmité supérieure est reliée à une enceinte de stockage adaptée à opérer en lit fluidisé dense grâce à des moyens de fluidisation secondaire disposés dans la partie inférieure de l'enceinte, l'extrêmité inférieure de ladite colonne comportant au moins un premier organe de fluidisation par un gaz, ladite enceinte de stockage ayant dans sa partie inférieure un tube de sortie relié à l'extrêmité supérieure du réacteur, qui comporte au moins un moyen de fluidisation par un gaz coopérant avec lesdits moyens de contrôle et de régulation.

Ces moyens d'introduction sont des injecteurs connus de l'homme de l'art, disposés de manière symétrique dans la section d'injection, dirigés habituellement vers l'axe du réacteur, sous un angle avantageusement compris entre 20 et 50° d'angle par rapport à la verticale. Ils sont adaptés à délivrer des gouttelettes liquides de diamètre en général compris entre 50 et 100 micromètres qui sont animées d'une vitesse, par exemple de 50 à 100 m/s, grâce à de la vapeur d'atomisation moyenne pression habituellement introduite dans une proportion de 2 à 10 % en poids par rapport à la charge et de préférence de 4 à 6 % en poids.

Suivant la caractéristique principale de l'invention, les moyens de régulation et de contrôle des moyens de fluidisation sont décrits dans la demande FR-A-2655053 et ils comprennent :

a) au moins une source de rayonnements ionisants et au moins un détecteur dudit rayonnement, ladite source et ledit détecteur étant positionnés à un niveau situé en aval, dans le sens du déplacement du solide, du niveau d'introduction du solide de manière à permettre la mesure de la masse volumique moyenne du solide en mouvement, selon au moins une direction déterminée sensiblement perpendiculaire à la direction de déplacement de la charge ou dans au moins une zone donnée, entre ladite source et ledit récepteur,

b) des moyens adaptés à la régulation d'une vanne de débit de fluide de fluidisation,

c) des moyens, par exemple de calculs programmables, qui permettent à partir de l'acquisition de la valeur de la masse volumique, selon au moins une direction déterminée ou dans au moins une zone donnée et à un instant donné, d'effectuer le craquage de la charge d'hydrocarbures dans des conditions stabilisées et préalablement déterminées, par comparaison avec les valeurs de référence des divers paramètres, valeurs par exemple mémorisées dans lesdits moyens de calcul programmables, en ajustant, de façon continue ou périodique, à partir des moyens b) le débit de fluide de fluidisation.

L'utilisation d'une source de rayonnements ionisants et d'un détecteur dudit rayonnement positionnés dans le même plan, de part et d'autre de la zone réactionnelle, à un niveau choisi, de préférence au voisinage immédiat en amont des injecteurs de charge, permet par la mesure de la variation de l'absorption de ce rayonnement (variation qui est directement liée à la variation de la masse volumique du solide en cet endroit de la mesure) de contrôler et par exemple de maintenir cette masse volumique entre deux valeurs extrêmes préalablement choisies. Il est possible d'effectuer une série de mesures suivant une série de directions dans le même plan et d'obtenir ainsi une cartographie de répartition de la masse volumique du solide dans le plan de mesure. Une telle cartographie peut être effectuée à l'aide d'un seul et même ensemble mobile, source et détecteur ou à l'aide de plusieurs sources et de plusieurs détecteurs.

La source de rayonnements ionisants peut être positionnée à l'extérieur de la zone réactionnelle ou à l'intérieur de la zone réactionnelle descendante, par exemple à proximité de sa périphérie. Il en est de même du détecteur de rayonnements. De manière préférée la source et le détecteur sont placés à l'extérieur de la zone réactionnelle.

Tout émetteur de rayonnements ionisants, ayant une puissance d'émission suffisante estimée en fonction des caractéristiques de l'appareillage utilisé, peut être employé. La source de rayonnements employée est habituellement une source de rayonnements alpha, béta, gamma, X ou une source de neutrons. On utilise le plus souvent une source de rayonnements gamma telle que par exemple une source scellée classique de Césium 137 ou une source de Cobalt 60. La puissance des sources utilisées est le plus souvent d'environ 1 à 100 Curies. Le détecteur du rayonnement est habituellement un détecteur classique sensible au rayonnements ionisants tel que par exemple un photomultiplicateur ou une chambre d'ionisation.

La ou les positions précises de la ou des sources de rayonnements ionisants et du ou des détecteurs correspondants, par exemple entre la zone d'introduction du solide comprenant des particules catalytiques et la zone d'introduction de la charge d'hydrocarbures, peut ou peuvent être aisément déterminées par l'homme du métier en particulier en fonction de la taille de la zone de réaction et de la masse volumique moyenne choisie pour le lit fluidisé entraîné dans les conditions employées.

Selon un autre mode de détermination de la masse volumique apparente, on peut utiliser un couple de capteurs de prise de pression (P1, P2) distants par exemple d'une fois le diamètre du réacteur et disposés selon la génératrice du réacteur cylindrique de craquage entre le moyen de fluidisation et les injecteurs de la charge. Les différences de pression enregistrées sont reliées par l'équation de perte de charge statique à la masse volumique de la suspension par la relation

$$\Delta P = P_2 - P_1 = M_v gh$$

$M_v$ masse volumique (kg/m$^3$)

g accélération de la pesanteur (m/s²)

h distance séparant les deux prises de pression (m)

ΔP perte de charge (Pa)

La perte de charge est comparée par un microordinateur à une perte de charge de référence et le microordinateur délivre, à la suite de cette comparaison, un signal qui permet l'ouverture au moins partielle ou la fermeture du moyen de fluidisation.

Dans le cadre de la présente invention, il n'est pas mentionné le type de catalyseurs employés, ni les divers fluides de fluidisation qui sont des données classiques bien connues de l'homme du métier.

On utilise de préférence des catalyseurs zéolithiques et de la vapeur d'eau, au moins un gaz inerte ou des hydrocarbures gazeux comme fluide de fluidisation aussi bien dans la colonne ascendante que dans la colonne descendante avant la zone réactionnelle.

L'invention sera mieux comprise au vu des figures illustrant de manière schématique et non limitative le procédé et un dispositif de mise en oeuvre, parmi lesquelles :

- la figure 1 montre une unité de craquage catalytique en lit fluidisé avec deux zones de régénérations et un réacteur de craquage descendant (dropper) alimenté en catalyseur à partir d'une enceinte de stockage en lit dense reliée à une colonne ascendante en provenance du lit dense du second régénérateur.
- la figure 2 illustre le cas où le réacteur est alimenté directement par voie descendante par le lit dense de second régénérateur.

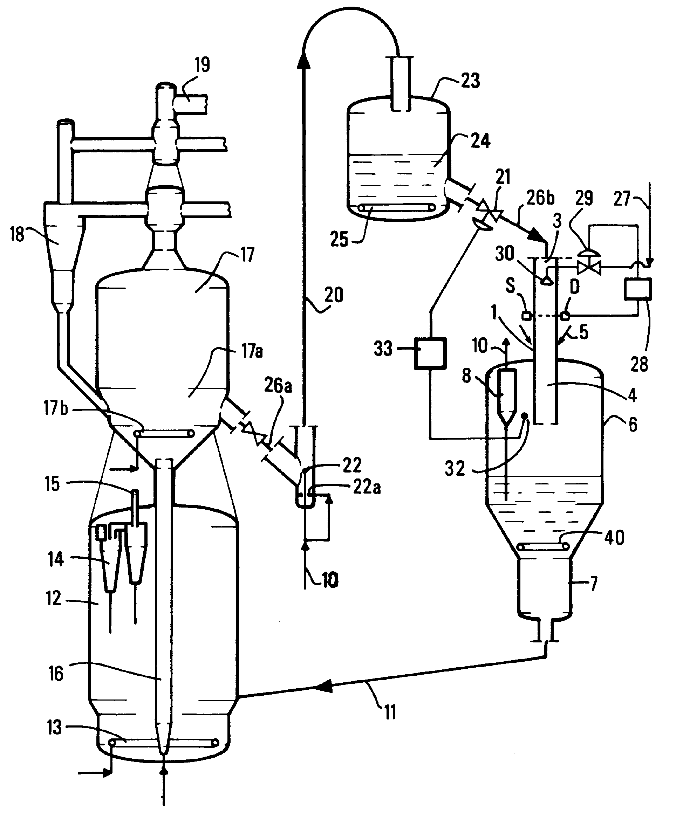

Selon la figure 1 le dispositif comporte un réacteur 1 tubulaire, de forme allongée (8 à 10 fois son diamètre de préférence, et sensiblement verticale), alimenté en sa partie supérieure 3 par du catalyseur zéolithique au moins en partie régénéré qui est amené par une ligne 26b. Le catalyseur est mis en contact avec une charge lourde d'hydrocarbures à haut point final d'ébullition, voisin de 700 °C introduite à une distance d'un moyen de fluidisation du catalyseur correspondant à 3 fois le diamètre du réacteur par des injecteurs 5 symétriquement répartis autour du réacteur. Ces injecteurs pulvérisent la charge sous forme de fines goutelettes grâce à de la vapeur d'eau moyenne pression (25 bars) et dirigent le pinceau de goutelettes sensiblement vers l'axe du réacteur, en direction du bas à une vitesse comprise entre 10 et 100 m/s. Le catalyseur et la charge pulvérisée s'écoulent donc à co-courant vers l'extrêmité inférieure 4 du réacteur à une vitesse voisine de 10 m/s. La charge est alors craquée dans des conditions appropriées et en un temps très court de 1 s environ.

L'extrêmité inférieure du réacteur débouche dans une enceinte de séparation 6 où sont séparés par gravité la majeure partie de catalyseur et un effluent de craquage de la charge. Le catalyseur désactivé s'accumule, sous la forme d'un lit fluidisé dense entretenu par des moyens appropriés 40, dans la partie inférieure 7 de l'enceinte où s'effectue à contre-courant en présence de vapeur d'eau, une séparation par strippage des hydrocarbures restant sur le catalyseur. La distance entre le niveau du lit dense et l'extrêmité inférieure du réacteur est en général comprise entre 3 et 10 fois le diamètre du réacteur et de préférence 5 à 7 fois. Un cyclone 8 ayant une jambe 9 plongeant dans le lit fluidisé dense de l'enceinte de séparation 6 termine la séparation de l'effluent du catalyseur entraîné et cet effluent est récupéré à la sortie supérieure de l'enceinte 6 par une ligne 10.

De l'extrêmité inférieure 7 du séparateur, le catalyseur, désactivé par le coke déposé lors de la réaction de craquage, est transféré par une ligne 11 et un gaz de transfert vers un premier régénérateur 12 où s'effectue en lit fluide dense, dans des conditions de combustion appropriées et en présence d'un gaz contenant de l'oxygène amené par une ligne 13 une partie de la combustion du coke déposé sur le catalyseur. Celle-ci est réalisée à une température d'environ 500 à 750 °C et est effectuée avec des concentrations en oxygène réduites choisies pour obtenir la combustion d'au moins 50 % de l'hydrogène contenu dans le coke déposé sur le catalyseur et brûler une partie du carbone (10 à 60 % en poids de carbone présent).

Un système de séparation cyclonique 14 est disposé dans la partie supérieure du premier régénérateur pour séparer les entraînements de catalyseur des gaz de combustion riches en CO, ceux-ci étant extraits par une ligne 15.

Le catalyseur partiellement régénéré dont le coke contient peu d'hydrogène est extrait du lit fluidisé dense du premier régénérateur par une colonne montante 16 et est conduit dans la partie inférieure 17a d'un second régénérateur 17 où est effectuée dans des conditions de seconde régénération appropriées, en lit fluidisé dense, la seconde régénération du catalyseur.

Celle-ci se déroule généralement à une température supérieure à 650 °C et inférieure à 900°C et sensiblement en l'absence de vapeur d'eau. La quantité d'oxygène introduite par un anneau de fluidisation 17b est suffisante pour maintenir une opération de régénération à haute température par combustion du coke, combinée à la combustion pratiquement complète du CO en CO2. Ainsi, sur les charges lourdes préconisées selon l'invention, des teneurs pondérales aussi faibles que 0,05 % de coke ont été mesurées sur le catalyseur régénéré. Des séparateurs cycloniques 18 généralement situés à l'extérieur du second régénérateur, en raison des niveaux de température atteints, permettent de séparer les effluents de combustion du catalyseur régénéré qui sont récupérés par une ligne 19.

Selon un premier mode de réalisation du dispositif illustré par la figure 1, une conduite de déversement du catalyseur 26a ou tube de liaison en provenance du lit fluidisé dense du second régénérateur et à une température d'environ 800 °C conduit le catalyseur à la base d'une colonne 20 ascendante verticale, de forme allongée.

La conduite de déversement aboutit entre un premier organe de fluidisation 22a qui est en général une couronne aérant le catalyseur et un second organe 22 au dessus de ladite couronne qui communique au catalyseur circulant dans la colonne une énergie correspondant en général à une vitesse de 5 à 20 m/s et de préférence 3 à 10 m/s. La masse volumique apparente dans la colonne est d'environ 50 kg/m³. Le premier organe de fluidisation est situé à la base de la colonne ascendante tandis que le second est, par exemple, situé à une distance par rapport à la cote d'arrivé de la conduite de déversement dans la colonne ascendante de 1 à 5 fois le diamètre de ladite colonne. Tous deux sont alimentés par au moins un gaz tel que de la vapeur d'eau, un gaz inerte ou des hydrocarbures gazeux.

Le second organe de fluidisation est habituellement constitué d'au moins deux lignes d'arrivée de gaz sensiblement symétriques et dirigées vers le haut de façon à disposer d'un co-courant de catalyseur et de gaz. Ces deux lignes déterminent par exemple un angle de 50° par rapport à la verticale.

La longueur de la colonne ascendante est en général de 3 à 90 fois son diamètre et avantageusement de 10 à 25 fois son diamètre. Dans sa partie supérieure, la colonne débouche dans une enceinte de stockage 23. Cette enceinte de stockage est constituée d'un lit fluidisé 24 dense mis en mouvement par une couronne de fluidisation 25 par un gaz tel que celui décrit précédemment.

Du lit fluidisé dense, part un tube 26b de sortie qui relie l'enceinte de stockage 23 à la partie supérieure 3 du réacteur de craquage 1. Au moins, un moyen de fluidisation 30 alimenté par au moins un gaz de fluidisation 27 décrit ci-dessus et relié à une vanne 29 de débit de fluide fait s'écouler le catalyseur à une concentration ou masse volumique apparente dans la suspension gaz-solide de 200 à 300 kg/m3 et selon une vitesse de 3 m/s environ, avant son contact avec la charge pulvérisée par les injecteurs. Ceux-ci sont avantageusement disposés en un point situé à une distance de l'extrêmité supérieure du réacteur (début de la partie verticale) correspondant à environ 6 fois le diamètre du réacteur.

La mesure de la masse volumique est effectuée selon une direction sensiblement perpendiculaire à l'axe du réacteur 1 de craquage. La source de rayonnement ionisant S est positionnée en amont des injecteurs 5 de la charge, à l'extérieur du réacteur et le rayonnement ayant traversé le réacteur contenant le solide en mouvement est récupéré par un détecteur D. Le signal est envoyé dans un organe 28 de traitement programmable qui contrôle et régule la vanne 29 de débit de fluide de fluidisation par référence à un point de consigne préalablement affiché.

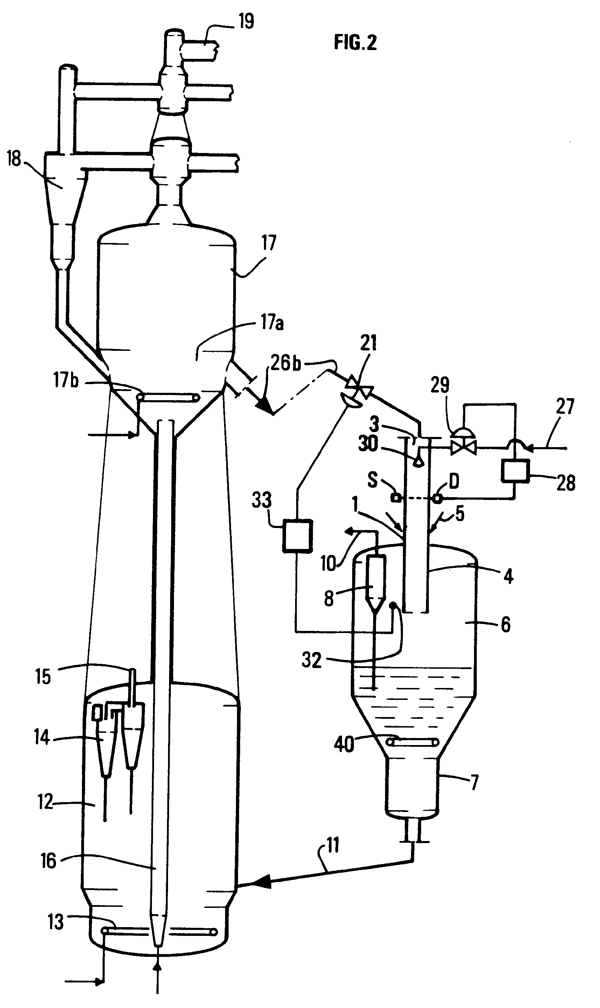

Selon un autre mode de réalisation illustré par la figure 2, le prélèvement du catalyseur régénéré est effectué directement dans le lit fluidisé dense non pas de l'enceinte de stockage 24 mais du second générateur 17 grâce à la conduite 26b qui fait descendre le catalyseur directement dans l'extrêmité supérieure 3 du réacteur 1.

Le catalyseur est fluidisé dans les conditions de masse volumique selon l'invention grâce au moyen de fluidisation 30, soit pommeau d'arrosoir d'injection soit piquages directement le long de la conduite, relié à la vanne 29 d'ouverture ou de fermeture de débit du fluide de fluidisation amené par la ligne 27. Cette vanne est reliée comme décrit ci-dessus à un microordinateur 28 fonctionnant comme dans le cas de la figure 1, et qui reçoit un signal délivré par le détecteur D, ce dernier recevant un rayonnement ionisant émis par la source S. La source S et le détecteur D comme dans le cas de la figure 1 sont situés sensiblement de part et d'autre à l'extérieur du réacteur 1 et en amont des injecteurs de la charge et de préférence selon une corde, selon laquelle la valeur mesurée de la masse volumique du catalyseur en mouvement est pratiquement égale à la valeur moyenne de cette masse volumique, calculée sur tout le plan de la section.

Dans le cadre de la présente invention, il n'est pas fait mention de tous les paramètres de fonctionnement de l'unité qui sont des données classiques connues de l'homme du craquage catalytique. Il est par exemple constant que la température des effluents de craquage mesurée en sortie du réacteur de craquage grâce à une sonde 32 est directement en relation avec le débit de catalyseur régénéré s'écoulant du lit fluidisé dense du second régénérateur et qui est assuré par une vanne 21, elle-même asservie par des moyens de contrôle 33 du débit connectés à la sonde 32.

Par ailleurs, on a décrit une étape de séparation par gravité du catalyseur et de l'effluent complétée par une étape secondaire de séparation par cyclonage d'une partie seulement du catalyseur qui n'a pas été séparé de l'effluent. Bien évidemment, on peut aussi effectuer l'étape de séparation en envoyant tout le catalyseur désactivé dans au moins un cyclone de grande taille dont l'entrée est connectée à l'extrêmité inférieure du réacteur et dont la jambe de sortie plonge dans la phase dense des moyens de séparation par strippage, ledit cyclone ayant une autre sortie pour l'effluent à récupérer.

L'exemple suivant illustre le procédé selon l'invention. Il a été réalisé dans les conditions suivantes :
Charge : résidu atmosphérique Arabian heavy (370 °C$^+$) d = 0,990
T °C catalyseur : 800 °C
T °C charge : 200 °C
Rapport catalyseur sur charge : 6
Fluide de fluidisation : hydrocarbures gazeux ($C_1$-$nC_4$)
Diamètre des gouttelettes de la charge : 80 micromètres

| Masse volumique de la suspension kg/m$^3$ | Temps de vaporisation (millisecondes) | |
|---|---|---|
| | réacteur descendant (dropper) | réacteur ascendant (riser) |
| 700 | 1,5 | 2 |
| 500 | 0,8 | 1 |
| 300 | 0,5 | 0,7 |
| 100 | 0,4 | 0,6 |
| 50 | 1,2 | 1,5 |

Le temps de vaporisation est déterminé par des profils de température à partir d'introduction de la charge.

**Revendications**

1.  Procédé de craquage catalytique en lit fluidisé d'une charge hydrocarbonée lourde dans une zone de réaction dans laquelle la charge et le catalyseur circulent à co-courant de haut en bas, le procédé comportant une étape d'alimentation en catalyseur, au moins en partie régénéré, à l'extrémité supérieure de la zone de réaction, une étape d'introduction et de pulvérisation de la charge dans une zone d'introduction située en dessous de la zone d'alimentation en catalyseur dans la partie supérieure de ladite zone de réaction, une étape de mise en contact dudit catalyseur et de ladite charge dans la partie supérieure de ladite zone de réaction, une étape de circulation du catalyseur et de la charge dans la zone de réaction au cours de laquelle on effectue le craquage de ladite charge dans des conditions de craquage appropriées et on désactive au moins en partie le catalyseur par dépôt de coke sur celui-ci, une étape de séparation et de strippage, du catalyseur désactivé de la charge hydrocarbonée craquée dans une zone de séparation à l'extrémité inférieure de la zone de réaction, une étape de régénération d'au moins une partie du catalyseur désactivé dans au moins une zone de régénération et une étape de recyclage du catalyseur au moins en partie régénéré dans une zone de recyclage en amont de l'extrémité supérieure de la zone de réaction, caractérisé en ce que :
    a) on prélève, lors de l'étape de recyclage, le catalyseur au moins en partie régénéré à partir d'une phase dense,
    b) on effectue l'étape d'alimentation en catalyseur à l'extrémité supérieure de la zone de réaction en présence d'au moins un gaz de fluidisation et l'on obtient une suspension de catalyseur et de gaz,
    c) on mesure la masse volumique de ladite suspension, par des moyens de mesure appropriés, en amont de la zone d'introduction de la charge,
    d) on ajuste et régule par des moyens adéquats le débit du gaz de fluidisation en amont de la zone d'introduction de la charge dans des conditions telles que la masse volumique de la suspension gaz-solide ainsi créée soit comprise entre 80 et 500 kg/m³ avant sa mise en contact avec ladite charge.

2.  Procédé selon la revendication 1 dans lequel la vitesse du catalyseur est comprise entre 2 et 8 m/s.

3. Procédé selon la revendication 1 ou 2, dans lequel le catalyseur régénéré est accéléré à une vitesse comprise entre 3 et 5 m/s et la masse volumique apparente de la suspension est comprise entre 200 et 300 kg/m$^3$.

4. Procédé selon l'une des revendications 1 à 3, dans lequel le catalyseur est régénéré dans deux zones de régénérations dans des conditions appropriées, le catalyseur désactivé étant envoyé dans une première zone de régénération puis dans une seconde zone de régénération, le catalyseur régénéré étant recyclé de la deuxième zone de régénération vers la zone de réaction à une température de 650 à 900 °C.

5. Procédé selon l'une des revendications 1 à 4 dans lequel la zone de recyclage est ascendante et où la vitesse d'ascension du catalyseur est de 5 à 20 m/s.

6. Procédé selon la revendication 5 dans lequel la zone de recyclage comprend, en aval de la zone ascendante, une zone de stockage en lit fluidisé dense où l'on fait s'écouler le catalyseur régénéré et on l'envoie de la zone de stockage dans la partie supérieure de la zone réactionnelle avec la masse volumique apparente de 80 à 500 kg/m$^3$.

7. Procédé selon l'une des revendications 1 à 4 dans lequel la zone de recyclage est descendante.

8. Procédé selon l'une des revendications 1 à 7 dans lequel on sépare le catalyseur désactivé de la charge craquée par gravité dans la zone de séparation puis on effectue une étape de cyclonage d'une partie au moins du catalyseur entraîné et on récupère un effluent de craquage.

9. Procédé selon l'une des revendications 1 à 7 dans lequel on sépare dans la zone de séparation le catalyseur désactivé de la charge craquée en procédant à une étape de cyclonage de tout le catalyseur et on récupère un effluent de craquage.

10. Dispositif de craquage catalytique en lit fluidisé d'une charge hydrocarbonée et de régénération de catalyseur désactivé par le craquage de ladite charge, comportant un réacteur tubulaire allongé (ou dropper) adapté à craquer ladite charge catalytiquement à co-courant et de haut en bas ayant une extrêmité supérieure et une extrêmité inférieure, ladite extrêmité supérieure comprenant des moyens d'introduction et de pulvérisation de la charge, des moyens d'introduction du catalyseur disposés en amont des moyens d'introduction et de pulvérisation de la charge, au moins une enceinte de séparation reliée à l'extrêmité inférieure du réacteur contenant des moyens de séparation primaire des particules catalytiques désactivées de la charge craquée, des moyens de séparation secondaire par strippage à la vapeur de la majeure partie du catalyseur entraîné par la charge craquée disposés dans la partie inférieure de l'enceinte de séparation, et au moins un moyen de récupération de la charge craquée ou effluent réactionnel, ledit dispositif comportant en outre au moins un régénérateur de catalyseur désactivé ayant une entrée reliée à la partie inférieure de l'enceinte de séparation et des moyens de recyclage du catalyseur au moins en partie régénéré situés entre une sortie inférieure du régénérateur et l'extrêmité supérieure du réacteur, caractérisé en ce que les moyens de recyclage (26b, 21) comportent en combinaison au moins un moyen (30) de fluidisation du catalyseur par un gaz adapté à amener le catalyseur à une masse volumique apparente appropriée en amont des moyens d'introduction (5) et de pulvérisation de la charge et des moyens (28) de contrôle et de régulation adaptés à coopérer avec ledit moyen de fluidisation.

11. Dispositif selon la revendication 10 comportant deux régénérateurs dans lequel l'enceinte de séparation est reliée au premier régénérateur et les moyens de recyclage sont reliés à la partie inférieure d'un second régénérateur.

12. Dispositif selon la revendication 11 dans lequel les moyens de recyclage comprennent une colonne (20) allongée sensiblement verticale dont l'extrêmité inférieure est reliée à la partie inférieure du second régénérateur par un tube de liaison (26a) et dont l'extrêmité supérieure est reliée à l'extrêmité supérieure du réacteur (1), l'extrêmité inférieure de ladite colonne (20) comportant au moins un organe de fluidisation (22) par un gaz, ledit moyen coopérant avec les moyens de régulation et de contrôle.

13. Dispositif selon la revendication 11 dans lequel les moyens de recyclage comprennent une colonne (20) allongée sensiblement verticale dont l'extrêmité inférieure est reliée à la partie inférieure du second régénérateur par un tube de liaison (26a) et dont l'extrêmité supérieure est reliée à une enceinte de stockage (23) adaptée à opérer en lit fluidisé dense grâce à des moyens de fluidisation secondaire (25) disposés dans la partie inférieure de l'enceinte, l'extrêmité inférieure de ladite colonne comportant au moins un premier organe de fluidisation par un gaz, ladite enceinte de stockage ayant dans sa partie inférieure un tube de sortie (26b) relié à l'extrêmité supérieure du réacteur, qui comporte au moins un moyen de fluidisation (30) par un gaz, ledit moyen coopérant avec lesdits moyens de contrôle et de régulation (28).

14. Dispositif selon la revendication 12 ou 13 dans lequel la colonne allongée (20) comprend deux organes de fluidisation (22a, 22), le premier (22a) étant situé à la base de la colonne, le second (22) étant situé au-dessus de la cote d'arrivée du tube de liaison (26a) dans ladite colonne à une distance de 1 à 5 fois le diamètre de la colonne.

15. Dispositif selon la revendication 12 ou 13 dans lequel la longueur de la colonne allongée et verticale est comprise entre 3 et 90 fois son diamètre et de préférence 10 à 25 fois son diamètre.

16. Dispositif selon la revendication 11 dans lequel les moyens de recyclage du catalyseur comportent un tube de sortie (26b) relié à la partie inférieure du second régénérateur et à l'extrêmité supérieure du réacteur, le tube de sortie (26b) comprenant au moins un moyen de fluidisation (30) par un gaz, ledit moyen coopérant avec lesdits moyens de régulation et de contrôle.

17. Dispositif selon l'une des revendications 10 à 16, dans lequel la longueur du réacteur est de 6 à 20 fois son diamètre à compter des moyens d'introduction de la charge.

18. Dispositif selon l'une des revendications 10 à 17, dans lequel les moyens d'introduction de la charge sont disposés à une distance dudit moyen de fluidisation (30) correspondant à 1 à 5 fois le diamètre du réacteur.

19. Dispositif selon l'une des revendications 10 à 18, dans lequel l'enceinte de séparation (6) où débouche l'extrêmité inférieure du réacteur est adaptée à opérer en lit dense et dans lequel ladite enceinte (6) contient au moins un cyclone (8) adapté à recevoir par une entrée l'effluent à récupérer et une partie du catalyseur entrainé par l'effluent, la distance entre le niveau du lit dense et l'extrêmité inférieure du réacteur étant comprise entre 3 à 10 fois le diamètre du réacteur et de préférence 5 à 7 fois, ledit cyclone ayant une jambe de sortie du catalyseur entraîné reliée aux moyens de séparation par strippage.

20. Dispositif selon l'une des revendications 10 à 18, dans lequel l'enceinte de séparation comprend au moins un cyclone dont l'entrée est connectée à l'extrêmité inférieure du réacteur et dont la jambe de sortie est reliée aux moyens de séparation par strippage, ledit cyclone ayant une autre sortie pour l'effluent à récupérer.

21. Dispositif selon l'une des revendications 10 à 20 dans lequel les moyens de contrôle et de régulation comprennent sensiblement de part et d'autre du réacteur, au moins une source de rayonnements ionisants (S) et au moins un détecteur (D) dudit rayonnement disposés entre les moyens de fluidisation et les moyens d'introduction de la charge et de préférence au voisinage immédiat en amont des moyens d'introduction de la charge, des moyens adaptés à l'ouverture au moins partielle ou à la fermeture du moyen de fluidisation (30), l'ensemble de ces moyens étant reliés à un microordinateur (28) qui délivre, par référence à un point de consigne, un signal commandant l'ouverture ou la fermeture du moyen de fluidisation.

22. Dispositif selon l'une des revendications 10 à 20 dans lequel les moyens de contrôle et de régulation comprennent un couple de capteur ($P_1$, $P_2$) de prise de pression disposés entre le moyen de fluidisation (30) et les moyens d'introduction (5) de la charge et selon une génératrice du réacteur (1), des moyens adaptés à l'ouverture au moins partielle ou à la fermeture du moyen de fluidisation (30), l'ensemble de ces moyens étant reliés à un microordinateur (28) qui délivre, par référence à un point de consigne, un signal commandant l'ouverture ou la fermeture du moyen de fluidisation.

23. Utilisation du dispositif selon l'une des revendications 10 à 22 dans un procédé de craquage catalytique en lit fluidisé d'une charge hydrocarbonée lourde contenant une quantité substantielle d'asphaltènes.

## Claims

1. Process for fluid catalytic cracking of a hydrocarbon charge in a reaction zone in which the charge and the catalyst circulate in a co-current top to bottom manner, the process having a stage of supplying at least partly regenerated catalyst to the upper end of the reaction zone, a stage of introducing and atomizing the charge in an introduction zone located below the catalyst supply zone into the upper part of said reaction zone, a stage of contacting said catalyst and said charge in the upper part of said reaction zone, a stage of circulating the catalyst and the charge in the reaction zone during which the cracking of said charge takes place under appropriate cracking conditions and the catalyst is at least partly deactivated by depositing coke thereon, a stage of separating and stripping the deactivated catalyst from the cracked hydrocarbon charge in a separating zone at the lower end of the reaction zone, a stage of regenerating at least part of the deactivated catalyst in at least one regenerating zone and a stage of recycling the at least partly regenerated catalyst in a recycling zone upstream of the upper end of the reaction zone, characterized in that

   a) during the recycling stage, the at least partly regenerated catalyst sampled from a dense phase,
   b) the stage of supplying catalyst to the upper end of the reaction zone takes place in the presence of at least one fluidization gas and a suspension of catalyst and gas is obtained,
   c) the density of said suspension is measured by appropriate measuring means upstream of the charge introduction zone and
   d) by adequate means adjustment and regulation take place of the flow rate of the fluidization gas upstream of the charge introduction zone under conditions such that the density of the gas-solid suspension formed in this way is between 80 and 500 kg/m$^3$ prior to its contacting with the said charge.

2. Process according to claim 1, wherein the catalyst velocity is between 2 and 8m/s.

3. Process according to claim 1 or 2, wherein the regenerated catalyst is accelerated to a velocity between 3 and 5 m/s and the apparent density of the suspension is between 200 and 300 kg/m$^3$.

4. Process according to any one of the claims 1 to 3, wherein the catalyst is regenerated in two regeneration zones under appropriate conditions, wherein the deactivated catalyst is fed into a first regeneration zone and wherein the catalyst recycled to the reaction zone at a temperature of 650 to 900°C comes from a second regeneration zone.

5. Process according to any one of the claims 1 to 4, wherein the recycling zone is upward and in which the rising speed of the catalyst is 5 to 20 m/s.

6. Process according to claim 5, wherein the recycling zone comprises, downstream of the rising zone, a dense fluidized bed storage zone, where the regenerated catalyst is made to flow and is fed from the storage zone into the upper part of the reaction zone with an apparent density of 80 to 500 kg/m$^3$.

7. Process according to any one of the claims 1 to 4, wherein the recycling zone is downward.

8. Process according to any one of the claims 1 to 7, wherein the deactivated catalyst is separated from the cracked charge by gravity in the separation zone, followed by a cyclone separation stage relative to at least part of the entrained catalyst and a cracking effluent is recovered.

9. Process according to any one of the claims 1 to 7, wherein in the separation zone separation takes place of the deactivated catalyst from the cracked charge by carrying out a cyclone separation stage on all the catalyst and a cracking effluent is recovered.

10. Apparatus for the fluid catalytic cracking of a hydrocarbon charge and the regeneration of deactivated catalyst by cracking said charge comprising an elongated tubular reactor (or dropper) able to crack said charge catalytically in co-current manner and from top to bottom, having an upper end and a lower end, said upper end having charge introduction and atomizing means, catalyst introduction means upstream of the charge introduction and atomizing means, at least one separating enclosure connected to the lower end of the reactor containing means for the primary separation of the deactivated catalytic particles from the cracked charge, means for secondary separation by steam stripping of most of the catalyst entrained by the cracked charge located in the lower part of the separating enclosure, and at least one means for the recovery of the cracked charge or reaction effluent, said apparatus also having at least one deacti-

11

EP 0 479 645 B1

vated catalyst regenerator having an inlet connected to the lower part of the separating enclosure and means for recycling the at least partly regenerated catalyst located between a lower outlet of the regenerator and the upper end of the reactor, characterized in that the recycling means (26b,21) have in combination at least one means (30) for fluidizing the catalyst by a gas suitable for bringing the catalyst to an appropriate apparent density upstream of the charge introduction and atomizing means (5) and checking and regulating means (28) suitable for cooperating with said fluidizing means.

11. Apparatus according to claim 10 having two regenerators, wherein the separating enclosure is connected to the first regenerator and the recycling means are connected to the lower part of a second regenerator.

12. Apparatus according to claim 11, wherein the recycling means comprise substantially vertical, elongated column (20), whose lower end is connected to the lower part of the second regenerator by a connecting tube (26a) and whose upper end is connected to the upper end of the reactor (1), the lower end of said column (20) having at least one gas fluidizing member (22), said means cooperating with the regulating and checking means.

13. Apparatus according to claim 11, wherein the recycling means comprise a substantially vertical, elongated column (20), whose lower end is connected to the lower part of the second regenerator by a connecting tube (26a) and whose upper end is connected to a storage enclosure (23) able to operate in a dense fluidized bed through secondary fluidization means (25) located in the lower part of the enclosure, the lower end of said column having at least one first gas fluidizing member, said storage enclosure having in its lower part an outlet tube (26b) connected to the upper end of the reactor, which has at least one gas fluidizing means (30), said means cooperating with said checking and regulating means (28).

14. Apparatus according to claims 12 or 13, wherein the elongated column (20) comprises two fluidizing members (22, 22a), the first (22a) being located at the bottom of the column and the second (22) above the arrival side of the connecting tube (26a) in said column at a distance of 1 to 5 times the column diameter.

15. Apparatus according to claims 12 or 13, wherein the length of the elongated, vertical column is between 3 and 90 and preferably 10 and 25 times its diameter.

16. Apparatus according to claim 11, wherein the catalyst recycling means incorporate an outlet tube (26b) connected to the lower part of the second regenerator and to the upper end of the reactor, the outlet tube (26b) having at least one gas fluidizing means (30), which cooperates with said checking and regulating means.

17. Apparatus according to any one of the claims 10 to 16, wherein the length of the reactor is 6 to 20 times its diameter starting from the charge introduction means.

18. Apparatus according to any one of the claims 10 to 17, wherein the charge introduction means are located at a distance from said fluidizing means (30) corresponding to 1 to 5 times the reactor diameter.

19. Apparatus according to any one of the claims 10 to 18, wherein the separating enclosure (6), into which issues the lower end of the reactor is able to operate in a dense bed and wherein said enclosure (6) contains at least one cyclone separator (8) able to receive through an inlet the effluent to be recovered and part of the catalyst entrained by the effluent, the distance between the level of said dense bed and the lower end of the reactor being between 3 and 10 and preferably 5 and 7 times the reactor diameter, said cyclone separator having an entrained catalyst outlet leg connected to the stripping separating means.

20. Apparatus according to any one of the claims 10 to 18, wherein the separating enclosure comprises at least one cyclone separator, whose inlet is connected to the lower end of the reactor and whose outlet leg is connected to the stripping separating means, said cyclone separator having another outlet for the effluent to be recovered.

21. Apparatus according to any one of the claims 10 to 20, wherein the checking and regulating means essentially comprise on either side of the reactor, at least one ionizing radiation source (S) and at least one detector (D) for said radiation positioned between the fluidizing means and the charge introduction means and preferably in the immediate vicinity upstream of the charge introduction means, means able to at least partly open or close the fluidizing means (30), all of the said means being connected to a microcomputer (28) which, by reference to a set point, supplies a signal controlling the opening or closing of the fluidizing means.

22. Apparatus according to any one of the claims 10 to 20, wherein the checking and regulating means incorporate a pair of pressure transducers ($P_1$, $P_2$) positioned between the fluidizing means (30) and the charge introduction means (5) and in accordance with a generatrix of the reactor (1), means able to bring about the at least partial opening or closing of the fluidizing means (30), all of the said means being connected to a microcomputer (28) which, by reference to a set point, supplies a signal controlling the opening or closing of the fluidizing means.

23. Use of the apparatus according to any one of the claims 10 to 22 in a fluid catalytic cracking process for a heavy hydrocarbon charge containing a substantial quantity of asphaltenes.

## Patentansprüche

1. Verfahren zum katalytischen Kracken im Fließbett von einer schwerflüchtigen kohlenwasserstoffhaltigen Charge in einer Reaktionszone, in welcher die Charge und der Katalysator im Gleichstrom von oben nach unten fließen, wobei das Verfahren einen Schritt zur Beschickung mit einem wenigstens zum Teil regenerierten Katalysator an dem oberen Ende der Reaktionszone, einen Schritt zur Einführung und zur Zerstäubung der Charge in einer Einführungszone, die unter der Beschickungszone vom Katalysator in den oberen Teil der Reaktionszone angeordnet ist, einen Schritt zur Inkontaktbringung des Katalysators und der Charge in dem oberen Teil der Reaktionszone, einen Schritt zum Durchfluß des Katalysators und der Charge in der Reaktionszone, in dessen Verlauf man das Kracken der Charge unter zweckmäßigen Krackbedingungen durchführt und den Katalysator wenigstens zum Teil durch Niederschlag von Koks auf diesem desaktiviert, einen Schritt zur Trennung und zum Strippen des desaktivierten Katalysators von der gekrackten kohlenwasserstoffhaltigen Charge in einer Trennzone am unteren Ende der Reaktionszone, einen Schritt zur Regenerierung von wenigstens einem Teil des desaktivierten Katalysators in wenigstens einer Regenerierungszone und einen Schritt zur Rückführung des wenigstens zum Teil regenerierten Katalysators in eine Rückführungszone stromaufwärts von dem oberen Ende der Reaktionszone umfaßt, dadurch gekennzeichnet, daß

a) man den wenigstens zum Teil regenerierten Katalysator im wesentlichen aus einer dichten bzw. kompakten Phase während des Schrittes zur Rückführung entnimmt,

b) man den Schritt zur Beschickung mit dem Katalysator an dem oberen Ende der Reaktionszone in Anwesenheit wenigstens eines Fluidisierungsgases durchführt und eine Suspension aus Katalysator und aus Gas erhält,

c) man die volumenbezogene Masse der Suspension durch zweckmäßige Meßmittel stromaufwärts von der Einführungszone der Charge mißt,

d) man die Menge an Fluidisierungsgas stromaufwärts von der Einführungszone der Charge einstellt und durch zweckmäßige Mittel regelt, unter solchen Bedingungen, daß die volumenbezogene Masse der Gas-Fest-Suspension vor ihrer Inkontaktbringung mit der Charge derart zwischen 80 und 500 kg/m$^3$ enthaltend geschaffen ist.

2. Verfahren nach Anspruch 1, in welchem die Geschwindigkeit des Katalysators zwischen 2 und 8 m/s enthaltend beträgt.

3. Verfahren nach Anspruch 1 oder 2, in welchem der regenerierte Katalysator auf eine Geschwindigkeit zwischen 3 und 5 m/s enthaltend beschleunigt wird und die volumenbezogene Masse der Suspension zwischen 200 und 300 kg/m$^3$ enthaltend beträgt.

4. Verfahren nach einem der Ansprüche 1 bis 3, in welchem der Katalysator unter zweckmäßigen Bedingungen in zwei Regenerierungszonen regeneriert wird, wobei der desaktivierte Katalysator in eine erste Regenerierungszone und dann in eine zweite Regenerierungszone verbracht wird und der regenerierte Katalysator von der zweiten Regenerierungszone hin zu der Reaktionszone bei einer Temperatur von 650 bis 900 °C zurückgeführt wird.

5. Verfahren nach einem der Ansprüche 1 bis 4, in welchem die Rückführungszone aufsteigend ist und bei der die Steiggeschwindigkeit des Katalysators von 5 bis 20 m/s beträgt.

6. Verfahren nach Anspruch 5, in welchem die Rückführungszone stromabwärts von der Steigzone eine Speicherungszone im dichten Fließbett umfaßt, in die man den regenerierten Katalysator laufen läßt und aus der Speicherungszone in den oberen Teil der Reaktionszone mit der volumenbezogenen Masse nahestehend von 80 bis 500 kg/m$^3$ verbringt.

7. Verfahren nach einem der Ansprüche 1 bis 4, in welchem die Rückführungszone absteigend ist.

8. Verfahren nach einem der Ansprüche 1 bis 7, in welchem man den desaktivierten Katalysator von der gekrackten Charge durch Schwerkraft in der Tennzone trennt, dann einen Schritt zur Zyklonierung von einem Teil wenigstens des mitgeführten Katalysators durchführt und einen Krackabgang zurückgewinnt.

9. Verfahren nach einem der Ansprüche 1 bis 7, in welchem man den desaktivierten Katalysator von der gekrackten Charge durch Vornahme eines Schrittes zur Zyklonierung des gesamten Katalysators in der Trennzone trennt und einen Krackabgang zurückgewinnt.

10. Vorrichtung zum katalytischen Kracken im Fließbett von einer kohlenwasserstoffhaltigen Charge und zur Regenerierung von durch das Kracken der Charge desaktiviertem Katalysator, umfassend einen röhrenförmigen, gestreckten Reaktor (oder dropper), der geeignet ist, die Charge katalytisch im Gleichstrom und von oben nach unten zu kracken, und der ein oberes Ende und ein unteres Ende aufweist, wobei das obere Ende Mittel zur Einführung und zur Zerstäubung der Charge umfaßt, Mittel zur Einführung des Katalysators, die strömaufwärts von den Mitteln zur Einführung und Zerstäubung der Charge angeordnet sind, wenigstens einen Trennbehälter, der mit dem unteren Ende des Reaktors verbunden ist, welcher Mittel zur ersten Trennung der desaktivierten katalytischen Partikel von der gekrackten Charge enthält, Mittel zur zweiten Trennung durch Strippen unter Dampf des überwiegenden Teils des von der gekrackten Charge mitgeführten Katalysators, die in dem unteren Teil des Trennbehälters angeordnet sind, und wenigstens Mittel zur Rückgewinnung der gekrackten Charge oder Reaktionsabgabe, wobei die Vorrichtung außerdem wenigstens einen Regenerator für den desaktivierten Katalysator umfaßt, der einen mit dem unteren Teil des Trennbehälters verbundenen Einlaß und zwischen einem unteren Auslaß des Regenerators und dem oberen Ende des Reaktors gelegene Mittel zur Rückführung des wenigstens zum Teil regenerierten Katalysators aufweist, dadurch gekennzeichnet, daß die Mittel zur Rückführung (26b, 21) in Kombination wenigstens ein Mittel (30) zur Fluidisierung bzw. Wirbelstromsintern des Katalysators durch ein zweckmäßiges Gas, das geeignet ist, den Katalysator bei einer nahestehend zweckmäßigen volumenbezogenen Masse stromaufwärts von den Mitteln zur Einführung (5) und zur Zerstäubung der Charge zuzuführen, und Mittel (28) zur Kontrolle und Regulierung, die geeignet sind, mit den Mitteln zur Fluidisierung zusammenzuwirken, umfassen.

11. Vorrichtung nach Anspruch 10, welche zwei Regeneratoren umfaßt, wobei der Trennbehälter mit dem ersten Regenerator verbunden ist und die Mittel zur Rückführung mit dem unteren Teil eines zweiten Regenerators verbunden sind.

12. Vorrichtung nach Anspruch 11, in welcher die Mittel zur Rückführung eine gestreckte, im wesentlichen vertikale Kolonne (20) umfassen, deren unteres Ende mit dem unteren Teil des zweiten Regenerators über ein Verbindungsrohr (26a) verbunden ist und deren oberes Ende mit dem oberen Ende des Reaktors (1) verbunden ist, wobei das untere Ende der Kolonne (20) wenigstens ein Fluidisierungsorgan (22) durch ein Gas umfaßt, das mit den Mitteln zur Kontrolle und Regulierung zusammenwirkt.

13. Vorrichtung nach Anspruch 11, in welcher die Mittel zur Rückführung eine gestreckte, im wesentlichen vertikale Kolonne (20) umfassen, deren unteres Ende mit dem unteren Teil des zweiten Regenerators über ein Verbindungsrohr (26a) verbunden ist und deren oberes Ende mit einem Speicherbehälter (23) verbunden ist, der geeignet ist, dank der in dem unteren Teil der Behälters angeordneten Mittel zur zweiten Fluidisierung (25) in einem dichten Fließbett zu wirken, wobei das untere Ende der Kolonne wenigstens ein erstes Fluidisierungsorgan durch ein Gas umfaßt, der Speicherbehälter in seinem unteren Teil ein Auslaßrohr (26b) aufweist, das mit dem oberen Ende des Reaktors verbunden ist, welcher wenigstens ein Fluidisierungsmittel (30) durch ein Gas umfaßt, das mit den Mitteln zur Kontrolle und Regulierung (28) zusammenwirkt.

14. Vorrichtung nach Anspruch 12 oder 13, in welcher die gestreckte Kolonne (20) zwei Fluidisierungsorgane (22a, 22) umfaßt, wobei das erste (22a) auf dem Boden der Kolonne angeordnet ist und das zweite (22) oberhalb der Einlaßseite des Verbindungsrohres (26a) in der Kolonne in einem Abstand von 1- bis 5-fachem Durchmesser der Kolonne gelegen ist.

15. Vorrichtung nach Anspruch 12 oder 13, in welcher die Länge der gestreckten und vertikalen Kolonne zwischen dem inklusive 3- und 90-fachem ihres Durchmessers und vorzugsweise dem 10- bis 25-fachen ihres Durchmessers beträgt.

16. Vorrichtung nach Anspruch 11, in welcher die Mittel zur Rückführung des Katalysators ein Auslaßrohr (26b) umfassen, das mit dem unteren Teil des zweiten Regenerators und mit dem oberen Ende des Reaktors verbunden ist, wobei das Auslaßrohr (26b) wenigstens ein Fluidisierungsmittel (30) durch ein Gas umfaßt, das Mittel mit den Mitteln zur Kontrolle und Regulierung zusammenwirkt.

17. Vorrichtung nach einem der Ansprüche 10 bis 16, in welcher die Länge des Reaktors vom 6- bis 20-fachen seines Durchmessers von den Mitteln zur Einführung der Charge an ist.

18. Vorrichtung nach einem der Ansprüche 10 bis 17, in welcher die Mittel zur Einführung der Charge in einem Abstand von dem Fluidisierungsmittel (30) entsprechend dem 1- bis 5-fachen Durchmesser des Reaktors angeordnet sind.

19. Vorrichtung nach einem der Ansprüche 10 bis 18, in welcher den Trennbehälter (6) an der Stelle, an der das untere Ende des Reaktors einmündet, geeignet ist, in dem dichten Bett zu wirken, und in welcher der Trennbehälter (6) wenigstens einen Zyklon (8) umfaßt, der geeignet ist, durch einen Einlaß den rückzugewinnenden Abgang und einen Teil des mit dem Abgang mitgeführten Katalysators aufzunehmen, wobei der Abstand zwischen dem Niveau des dichten Bettes und dem unteren Ende des Reaktors zwischen dem 3- bis 10-fachem Durchmesser des Reaktors und vorzugsweise dem 5- bis 7-fachem umfaßt ist, der Zyklon einen Auslaßschenkel für den mitgeführten Katalysator aufweist, der mit den Mitteln zur Trennung durch Strippen verbunden ist.

20. Vorrichtung nach einem der Ansprüche 10 bis 18, in welcher der Trennbehälter wenigstens einen Zyklon umfaßt, dessen Einlaß mit dem unteren Ende des Reaktors verbunden ist und dessen Auslaßschenkel mit den Mitteln zur Trennung durch Strippen verbunden ist, wobei der Zyklon einen weiteren Auslaß für den zurückzugewinnenden Abgang aufweist.

21. Vorrichtung nach einem der Ansprüche 10 bis 20, in welcher die Mittel zur Kontrolle und Regulierung im wesentlichen auf beiden Seiten des Reaktors wenigstens eine ionisierende Strahlungsquelle (S) und mindestens einen Strahlungsdetektor (D), der zwischen den Fluidisierungsmitteln und den Mitteln zur Einführung der Charge und vorzugsweise in Nachbarschaft unmittelbar stromaufwärts von den Mitteln zur Einführung der Charge angeordnet ist, Mittel, die zur wenigstens teilweisen Öffnung oder zur Schließung der Fluidisierungsmittel (30) geeignet sind, umfassen, wobei die Gesamtheit dieser Mittel mit einem Mikrocomputer (28) verbunden sind, der unter Bezug auf einen Einstellpunkt ein Signal aussendet, welches die Öffnung oder die Schließung der Fluidisierungsmittel steuert.

22. Vorrichtung nach einem der Ansprüche 10 bis 20, in welcher die Mittel zur Kontrolle und Regulierung ein Paar Meßfühler ($P_1$, $P_2$) zur Druckaufnahme umfassen, die zwischen den Fluidisierungsmitteln (30) und den Mitteln zur Einführung (5) der Charge angeordnet sind, und gemäß einem Generator des Reaktors (1) die Mittel, die zur wenigstens teilweisen Öffnung oder zur Schließung der Fluidisierungsmittel (30) geeignet sind, wobei die Gesamtheit dieser Mittel mit einem Mikrocomputer (28) verbunden sind, der unter Bezug auf einen Einstellpunkt ein Signal aussendet, welches die Öffnung oder die Schließung der Fluidisierungsmittel steuert.

23. Verwendung der Vorrichtung nach einem der Ansprüche 10 bis 22 in einem Verfahren zum katalytischen Kracken im Fließbett von einer schwerflüchtigen kohlenwasserstoffhaltigen Charge, die eine wesentliche Menge von Asphaltenen umfaßt.

**FIG.2**